Europäisches Patentamt

European Patent Office

Office européen des brevets

(19)

(11) Veröffentlichungsnummer: **0 479 144 A2**

# EUROPÄISCHE PATENTANMELDUNG

(12)

(21) Anmeldenummer: **91116516.5**

(22) Anmeldetag: **27.09.91**

(51) Int. Cl.5: **G03B 27/72**

(30) Priorität: **02.10.90 DE 4031064**

(43) Veröffentlichungstag der Anmeldung:
**08.04.92 Patentblatt 92/15**

(84) Benannte Vertragsstaaten:
**DE FR GB IT**

(71) Anmelder: **SEITZ PHOTOTECHNIK AG**

**CH-8513 Lustdorf(CH)**

(72) Erfinder: **Seitz, Peter**

**Hauptstrasse**
**CH-8513 Lustdorf(CH)**
Erfinder: **Seitz, Werner**
**Hauptstrasse**
**CH-8513 Lustdorf(CH)**
Erfinder: **Idler, Siegfried**
**Drosselweg 7**
**W-8960 Kempten(DE)**

(74) Vertreter: **Hübner, Hans-Jürgen, Dipl.-Ing.**
**Mozartstrasse 21**
**W-8960 Kempten(DE)**

(54) **Verfahren und Vorrichtung zum Aufbelichten eines Filmbildes auf einem Fotopapier oder dergl.**

(57) Eine Dichteausgleichseinrichtung (28) für einen photografischen Vergrößerer (10) umfaßt eine Lichtempfängereinheit (30) unterhalb des Negativfilms (22). Das Durchlicht wird durch eine Vielzahl lichtempfindlicher Elemente (32) punktuell gemessen und in Abhängigkeit von diesen Meßwerten wird eine Vielzahl von Abschirmelementen (36, 38) in den Belichtungsstrahl (20) einer Belichtungseinheit (12) mehr oder weniger weit eingeschoben, um die Querschnittsfläche des Belichtungsstrahls punktuell bzw. bereichsweise abzudunkeln oder abzuschirmen.

Das neue Verfahren gewahrleistet einen automatischen Dichteausgleich durch selektive Lichtmengenregelung insbesondere bei der Belichtung von Fotopapier.

FIG.1

EP 0 479 144 A2

Die Erfindung betrifft ein Verfahren und eine Vorrichtung zum Aufbelichten eines Filmbildes auf einem Fotopapier, bei dem die auf das Fotopapier auftreffende Lichtmenge in wählbaren Bereichen relativ zu anderen Bereichen reduziert wird.

Bei einer photographischen Aufnahme kontrastieren häufig helle Bereiche und dunkele Bereiche des Bildes stark, weswegen bei der Vergrößerung die Belichtung manuell dadurch beeinflußt wird, daß die hellen Bereiche kürzer und/oder die dunklen Bereiche länger belichtet werden. Dies geschieht dadurch, daß die hellen Bereiche durch "Wedeln" vorübergehend abgedunkelt werden, sodaß für die dunklen Bereiche eine längere Belichtung des Fotopapiers möglich ist. Diese Arbeit erfordert sehr viel Erfahrung und Zeitaufwand und ist dennoch in vielen Fällen unvollkommen, weil kleine abzudunkelnde Bereiche bei diesem manuellem Betrieb nicht genau genug erfaßt werden können.

Aufgabe der Erfindung ist es, ein Verfahren sowie eine Vorrichtung zur Durchführung des Verfahrens zu schaffen, um einen automatischen Dichteausgleich durch lokalisierte Lichtmengenregelung zu schaffen.

Beim erfindungsgemäßen Verfahren wird diese Aufgabe dadurch gelöst, daß ein das Filmbild durchsetzendes Lichtstrahlbündel auf eine Vielzahl von dicht nebeneinander angeordneten und jeweils einem Bildsegment zugeordneten lichtempfindlichen Elementen fällt, deren elektrische Ausgänge jeweils in Beziehung zu den Lichtdurchtrittsmengen durch die Bildsegmente stehen, daß diese elektrischen Ausgänge erfaßt und in deren Abhängigkeit in dem der Belichtung des Fotopapiers dienenden Strahlengang des oder eines weiteren Lichtstrahlbündels mindestens einige einer Vielzahl von Abschirmelementen aktiviert werden, die je einem Bildsegment zugeordnet sind.

Erfindungsgemäß wird also das Filmbild rastermäßig abgetastet, wobei die Lichtdurchtrittsmengen pro Bildsegment separat erfaßt, in entsprechende elektrische Ausgangssignale umgesetzt und in Abhängigkeit von diesen Ausgangssignalen die jeweils zugeordneten Abschirmelemente angesteuert werden. Dabei liegt es im Rahmen der Erfindung, einen Flächenbildaufnehmer zu verwenden, der das Filmbild zeilen- und reihenmäßig gleichzeitig auf Helligkeitsdurchtritt abtastet, die abgetasteten Werte speichert und beim nachfolgendem Belichtungsvorgang des Filmbildes die Abschirmelemente entsprechend den empfangenen Lichtwerten aktiviert. Genausogut kann aber auch im Durchlaufverfahren gearbeitet werden und hier werden ein Filmband und ein Fotopapierband vorzugsweise gegenläufig synchron entsprechend dem Vergrößerungsfaktor kontinuierlich bewegt, wobei vor der Belichtungsstation ein schmaler Ausschnitt des Filmbildes mittels einer Lichtempfängerzeile abgetastet wird. Die abgetasteten Werte werden gespeichert bzw. in die Steuersignale der Abschirmelemente umgewandelt, die dann gespeichert werden, bis der zugehörige Bildausschnitt in die Belichtungszone kommt, wo dann die Aktivierung der Abschirmelemente entsprechend den vorher gemessenen Lichtdurchtrittswerten stattfindet.

Die Erfindung schließt sowohl die Ausführung ein, bei der für die Durchleuchtung des Filmbildes zur Bestimmung der Lichtdurchtrittsmengen eine eigene Lichtquelle unabhängig von der Belichtungseinheit für das Fotopapier verwendet wird, wie es auch möglich ist, für die Durchlichterfassung und die Belichtung dieselbe Lichtquelle zu verwenden. Im letzteren Fall kann z.B. die Lichtempfängereinheit an einem Schlitten angebracht sein, der vor der Belichtung des Fotopapiers in das Durchlicht des Filmbildes fährt, dort die Bildsegmente auf Durchlichtmengen abtastet und verzögerungsfrei die jeweiligen Abschirmelemente aktiviert und anschließend in eine Ruheposition außerhalb des Belichtungsstrahls zurückfährt, wonach die kontrollierte, lokal unterschiedliche Belichtung des Fotopapiers stattfindet.

Da die lichtempfindlichen Elemente der Lichtempfängereinheit eine Ausgangsspannung entsprechend dem gemessenen Lichteinfall erzeugen, können somit nicht nur die Position der Abschirmelemente bestimmt, sondern auch deren Verweildauer geregelt werden. In besonders hellen Zonen des Filmbildes liefern die zugehörigen Fotodioden, -transistoren o.ä. lichtempfindliches Material (Zellen) höhere Ausgangsspannungen, sodaß hier die Verweilzeit der Abschirmelemente entsprechend klein sein sollte (Negativfilm).

In den Unteransprüchen sind vorteilhafte Ausgestaltungen der Erfindung unter Schutz gestellt. Die Abschirmelemente können lichtundurchlässig oder auch lichtteildurchlässig sein. Sie können gemäß einer Ausgestaltung der Erfindung in verschiedenen Ebenen angeordnet sein, sodaß sie sich bei ihrer Bewegung nicht gegenseitig behindern. So liegt es im Rahmen einer erfindungsgemäßen Ausgestaltung, die einzelnen Abdeckelemente aus einer aufrechten Ruhestellung in der sie den Lichtdurchtritt praktisch nicht behindern, in eine dazu rechtwinklige Funktionsstellung zu verschwenken, wie es auch möglich ist, die Abschirmelemente fingerartig auszubilden, die in einer oder mehreren Ebenen senkrecht zum Lichtstrahl durch separate Antriebsmittel verschiebbar oder verschwenkbar sind.

Eine andere einfache Realisierung einer Abschirmeinheit besteht darin, eine Flüssigkristallplatte zu verwenden, die rastermäßig in Einzelsegmente unterteilt ist, welche separat ansteuerbar sind. Im nicht angesteuerten Zustand ist die Flüssigkristallplatte durchsichtig, sodaß ein Einbau in den Belichtungsstrahl des Vergrößerungsgerätes möglich ist. Bei Ansteuerung der einzelnen Segmente verfärben sich diese , wodurch die gewünschten lokalen Abdunklungen erzielt werden.

Die Abdunklungszeiten können softwaremäßig entsprechend den gemessenen Lichtdurchtrittsmengen der lichtempfindlichen Elemente geregelt werden.

Dank der Erfindung wird also ein vollautomatischer Dichteausgleich bei der Belichtung von Fotopapiermaterial erreicht, wobei die Lichtmengensteuerung wesentlich zuverlässiger und genauer ist als bei manueller Arbeitsweise. Die erfindungsgemäßen Vorteile werden aber nicht nur bei der Herstellung hochwertiger Papierbilder erzielt, sondern es können auch elektronisch aufgezeichnete Bilder in gleicher Weise durch den automatischen Dichteausgleich verbessert werden.

Anhand der Zeichnung, sei die Erfindung beispielsweise näher erläutert.

Er zeigt

FIG. 1 eine schematische Schnittansicht durch eine Vorrichtung zum automatischen Dichteausgleich bei der Abbildung eines Filmbildes auf einer Fotopapierbahn,

FIG. 2 eine Ansicht eines Filmbildes mit dem momentan belichteten Bildausschnitt,

FIG. 3 die Anordnung von Abschirmelementen im Belichtungsstrahlgang für den Bildausschnitt gemäß FIG. 2,

FIG. 4 eine schematische Ansicht einer Vergrößerungsapparatur mit im Strahlengang fest eingebauter Abschirmeinheit und verfahrbarer Lichtempfängereinheit,

FIG. 5 einen Vergrößerer ähnlich FIG. 4, jedoch mit fest installierter Lichtempfängereinheit und einem teildurchlässigen Spiegel,

FIG. 6 eine schematische Ansicht eines Vergrößerers ählich den Figuren 4 und 5, bei dem jedoch eine Abschirmeinheit in Form eines elektromechanischen Druckers ausgebildet ist, und

FIG.7 eine Draufsicht auf die vom Filmausschnitt gemäß FIG. 2 durch die Lichtempfängereinheit angesteuerte Abschirmeinheit.

Ein Vergrößerungsapparat 10 weist einen Colorkopf 12 mit Beleuchtung 14 und Zylinderlinse 16 auf. Im Boden des Colorkopfes 12 befindet sich eine zentrale Öffnung 18, durch die der Belichtungsstrahl 20 austritt. Unmittelbar unter dem Colorkopf 12 ist ein Film 22 längsbeweglich geführt. Er wird in Richtung des Pfeiles mit konstanter Geschwindigkeit angetrieben. Im Abstand unterhalb des Colorkopfes 12 befindet sich ein Objektiv 24. Der Belichtungsstrahl 20 durchsetzt das Objektiv 24 und fällt auf die unterhalb des Objektives in genügendem Abstand angeordnete Papierbahn 26, die in Richtung des Pfeiles, also entgegengesetzt zum Film 22 kontinuierlich bewegt wird, und zwar mit einer Geschwindigkeit, die unter Beachtung des Abbildungsmaßstabes der Filmgeschwindigkeit entspricht. Zwischen Film 22 und Objektiv 24 ist die erfindungsgemäße Dichte-Ausgleichseinrichtung 28 angeordnet.

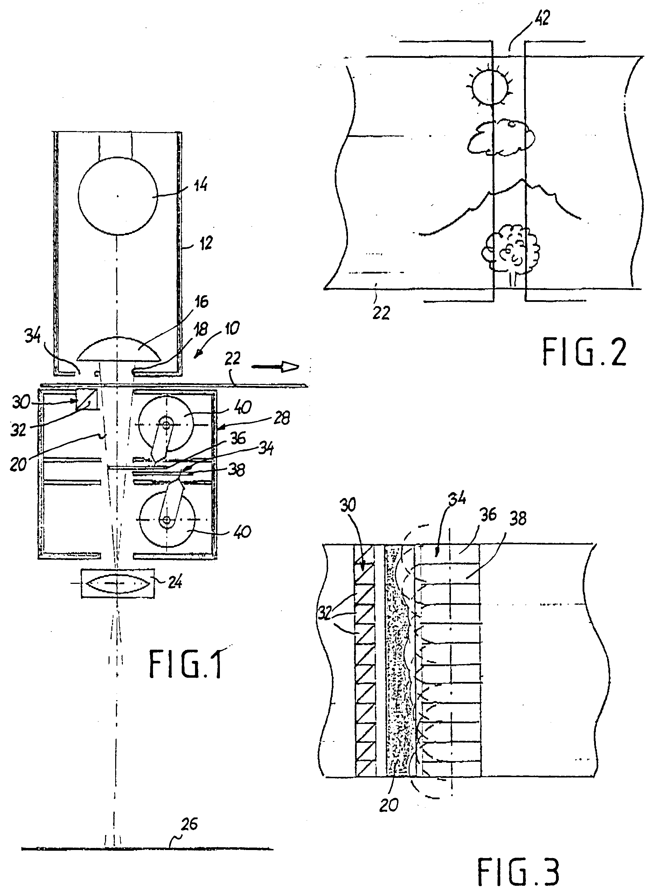

Diese weist eine Lichtempfängereinheit 30 auf, die unmittelbar unter der Bewegungsebene des Filmes 22 vor dem Belichtungsstrahl 20 angeordnet ist und aus einer Vielzahl von lichtempfindlichen Elementen 32 besteht, die dicht benachbart quer zum Filmtransport angeordnet sind, wie dies FIG. 3 veranschaulicht. Der Boden des Colorkopfes 12 hat eine zusätzliche Öffnung 34, durch die hindurch Licht von der Zylinderlinse 16 durch den Film 22 auf die Lichtempfängereinheit 30 geschickt wird. In der Dichteausgleichseinrichtung 28 ist weiterhin eine Abschirmeinheit 34 angeordnet, die hier nur schematisch dargestellt ist und eine obere Reihe von Abschirmelementen 36 und eine untere Reihe an Abschirmelementen 38 aufweist, wobei die Abschirmelemente 36 der oberen Reihe zu denjenigen der unteren Reihe um eine halbe Elementenbreite versetzt sind. Die Abschirmelemente 36, 38 sind in Form von vorschiebbaren und zurückziehbaren Fingern ausgebildet und werden von elektromotorischen Antrieben 40 angetrieben. Die in FIG. 1 rechts dargestellte Abschirmeinheit 34 kann vorzugsweise in spiegelbildlicher Anordnung auch in der linken Hälfte der Dichteausgleichseinrichtung 28 vorgesehen werden.

Beim Filmtransport gelangt der in FIG. 2 mit 42 bezeichnete Filmausschnitt in den Erfassungsbereich der lichtempfindlichen Einheit 30 und die lichtempfindlichen Elemente 32 empfangen das den Filmausschnitt 42 durchdringende Licht. Da es sich um einen Filmnegativ handelt, erhalten die, die "Sonne" abtastenden lichtempfindlichen Elemente 32 weniger Licht, als die den "Baum" abtastenden Elemente 32. Die Ausgangsspannungen der lichtempfindlichen Elemente sind dementsprechend unterschiedlich. Sie werden gespeichert und zur Positionssteuerung der Abschirmelemente 36, 38 verwendet, wenn sich dieser Bildausschnitt 42 im Belichtungsstrahl 20 befindet. Die zeitliche Verzögerung zwischen Abtastung und Betätigung der Abschirmelemente errechnet sich aus der dazwischenliegenden Distanz und der Filmgeschwindigkeit. Wie sich aus einem Vergleich der Figuren 2 und 3 ergibt, werden die Abschirmelemente 36, 38 im Bereich der "Sonne" des Filmausschnittes 42 weiter in den Belichtungsstrahl 20 hineingeschoben als die Abschirmelemente 36, 38 für den Bereich des "Baumes". Lezterer Bereich erhält also eine insgesamt geringere Menge Belichtungslicht als der auf dem Fotopapier hell erscheinende Bereich der "Sonne".

Da der Film 22 kontinuierlich bewegt wird, sind auch die Abschirmelemente 36, 38 in ständiger Bewegung entsprechend den sich ständig ändernden Ausgangsspannungen der lichtempfindlichen Elemente 32.

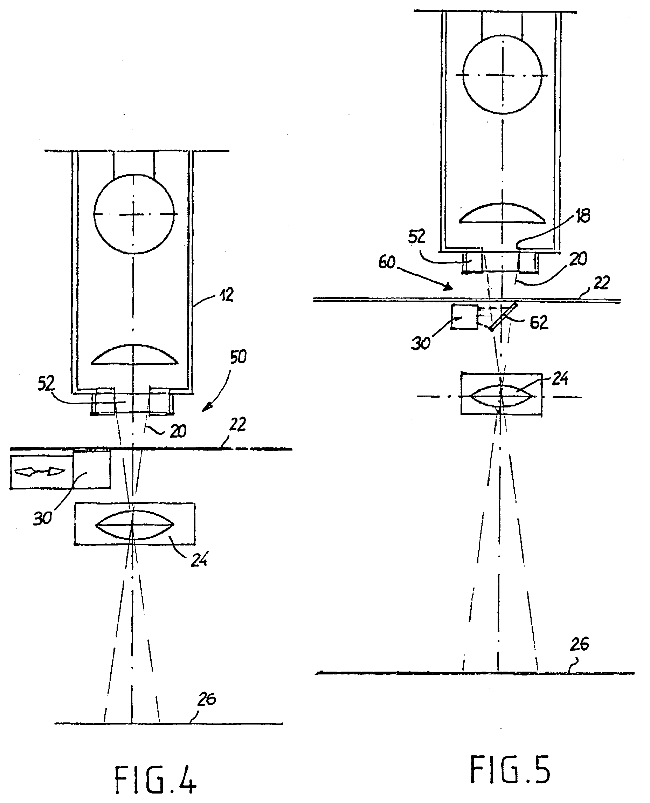

FIG. 4 zeigt eine Dichteausgleichseinrichtung 50, bei der ein Colorkopf 12 verwendet wird unterhalb dessen Bodenöffnung 18 eine Flüssigkristallplatte 52 angeordnet ist, die rastermäßig in eine Vielzahl von elektrisch ansteuerbaren Segmenten unterteilt ist. Im nicht angesteuerten Zustand ist die gesamte Flüssigkristallplatte 52 durchsichtig, wird also vom Belichtungsstrahl 20 im wesentlichen unbehindert durchsetzt. Die lichtempfindliche Einrichtung 30 ist unmittelbar unterhalb des Filmes 22 hin- und herverschiebbar angeordnet. Sie kann in den Belichtungsstrahlengang 20 verfahren werden, um das dort stationär gehaltene Bild scannerartig abzutasten, wobei jede Zeilenabtastung in einem nicht dargestellten Speicher abgelegt wird. In gleicher Weise ist aber auch eine Flächenabtastung durch einen Flächenbildaufnehmer möglich. Nach der Messung des Lichtdurchtrittes durch die einzelnen Bildsegmente des Filmes 22 wird die Lichtempfängereinrichtung 30 in die in Flg. 4 dargestellte Stellung zurückgefahren. Aus dem Speicher werden nun die einzelnen Rastersegmente der Flüssigkristallplatte 52 softwaremäßig angesteuert, sodaß dunkle Rasterzonen dort erscheinen, wo die Belichtungsmenge reduziert werden muß.

Die beschriebene Anordnung gemäß FIG. 4 eignet sich besonders für das Vergrößern von Filmbildern im intermittierenden Verfahren, bei dem also das Filmbild während der Belichtung stationär gehalten wird.

Die beschriebene Dichteausgleichseinrichtung 50 ist aber mit einer geringen Abwandlung auch für den kontinuierlichen Betrieb geeignet. Dafür wäre es lediglich erforderlich, die Lichtempfängereinheit 30 stationär z.B. unterhalb einer separaten Beleuchtungsquelle in beliebigem Abstand vom Belichtungsstrahl 20 anzuordnen, wobei dann wiederum zwischen Signalempfang und Betätigung der Abschirmelemente eine entsprechende Verzögerung berücksichtigt werden muß.

FIG. 5 erläutert eine Dichteausgleichseinrichtung 60, welche ebenfalls als Abschirmeinheit 52 eine Flüssigkristallplatte verwendet. Es entfällt hier jedoch eine eigene Beleuchtungseinheit der Lichtempfängereinheit 30, vielmehr ist ein teildurchlässiger Spiegel 62 im Belichtungsstrahlgang 20 angeordnet, der den größten Teil des Belichtungsstrahls durch das Objektiv 24 auf das Fotopapier 26 schickt, jedoch einen kleinen Teil zur Lichtempfängereinheit 30 umlenkt. Diese Einrichtung hat den Vorteil, daß eine verzögerungsfreie Ansteuerung der Abschirmelemente von der Lichtempfängereinheit 30 möglich ist.

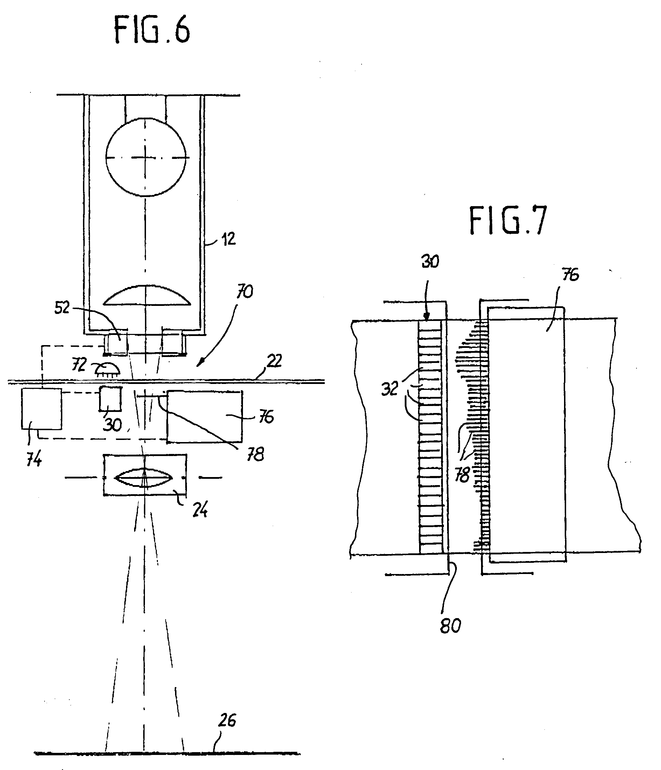

FIG. 6 veranschaulicht eine Dichteausgleichseinrichtung 70, bei der wiederum als Abschirmeinheit 52 eine Flüssigkristallplatte verwendet wird. Für die Lichtempfängereinheit 30 wird eine separate Lichtquelle 72 unmittelbar oberhalb des Filmes 22 verwendet. Die lichtempfindlichen Elemente dieser Lichtempfängereinheit 30 sind mit einer Auswerte-Speicher-Ansteuereinheit 74 verbunden, die ihrerseits Verbindungen zu den einzelnen Rastersegmenten der Flüssigkristallplatte 52 hat. Eine zweite Abschirmeinheit ist hier als mechanischer Aktor 76 mit feinen Fingern 78 wie bei einem Nadeldrucker gezeigt, dessen Nadeln 78 die Abschirmelemente darstellen. Da der Hub solcher serienmäßigen Nadeldrucker gering ist, werden vorzugsweise zwei einander gegenüberliegende identische Nadeldrucker verwendet, um die Abschirmelemente von beiden Seiten her in den Belichtungsstrahl 20 eintreten zu lassen.

FIG. 7 ist eine Draufsicht auf die sich unmittelbar unter dem Film 22 befindliche Anordnung, wobei sich die Abschirmelemente 78 des Nadeldrukkers 76 in der, dem Bildausschnitt 42 gemäß FIG. 2 entsprechenden Stellung befinden. Diese Abschirmelemente 78 ragen unterschiedlich weit in einen definierten Gehäusespalt 80 hinein, dessen Breite dem durch die Lichtempfängereinheit 30 abgetasteten Bildausschnitt 42 entspricht.

Die Ausführung gemäß FIG. 6 soll zeigen, daß die Dichteausgleichseinrichtung 70 auch eine Kombination von zwei verschiedenen Abschirmeinheiten 52, 76 aufweisen kann. Für besonders stark kontrastierende Bilder kann die mechanische Abschirmeinheit 76 für den groben Dichteausgleich sorgen, während die optische Abschirmeinheit für den Feinausgleich verwendet wird.

**Patentansprüche**

1. Verfahren zum Aufbelichten eines Filmbildes auf einem Fotopapier bzw. zum Aufzeichnen auf einem elektronischen Bildaufnehmer, bei dem die auf das Fotopapier bzw. den Bildaufnehmer auftreffende Lichtmenge in wählbaren Bereichen relativ zu anderen Bereichen reduziert wird, dadurch gekennzeichnet, daß ein das Filmbild durchsetzendes Lichtstrahlbündel auf eine Vielzahl von dicht nebeneinander angeordneten und jeweils einem Bildsegment zugeordneten lichtempfindlichen Elementen fällt, deren elektrische Ausgänge jeweils in Beziehung zu den Lichtdurchtrittsmengen durch die Bildsegmente stehen, daß diese elektrischen Ausgänge erfaßt und in deren Abhängigkeit in dem der Belichtung des Fotopapiers bzw. des Bildaufnehmers dienenden Strahlengang des oder eines weiteren Lichtstrahlbündels mindestens einige einer Vielzahl von Abschirmelementen aktiviert werden, die je einem Bildsegment zugeordnet sind.

2. Verfahren nach Anspruch 1, dadurch gekennzeichnet, daß die lichtempfindlichen Elemente eine Lichtempfängerzeile bilden, die durch Relativbewegung zum Film das Filmbild flächenmäßig abtastet.

3. Verfahren nach Anspruch 1 oder 2, dadurch gekennzeichnet, daß die Vielzahl von lichtempfindlichen Elementen zu einer mindestens einreihigen Rastereinheit zusammengefaßt sind, welche vor der Belichtung des Fotopapiers bzw. des Bildaufnehmers relativ zum Film in eine Arbeitsposition bewegt wird, in der sie das Durchlicht des Filmbildes oder -bildausschnittes zeilen- oder flächenmäßig erfaßt und nach Erfassung und ggf. Speicherung der elektrischen Ausgänge der lichtempfindlichen Elemente und vor der Belichtung des Fotopapiers bzw. des Bildaufnehmers aus dem Belichtungsstrahlbündel wieder entfernt wird.

4. Verfahren nach einem der Ansprüche 1 bis 3, dadurch gekennzeichnet, daß der Film und das Fotopapier kontinuierlich und je nach dem Abbildungsmaßstab mit unterschiedlicher jedoch jeweils konstanter Geschwindigkeit transportiert werden, daß die Vielzahl an lichtempfindlichen Elementen in einer quer oder unter einem spitzen Winkel zur Transportrichtung liegenden Zeile ortsfest angeordnet sind, daß ein zu dieser Lichtabtastzeile paralleler, ggf. in Lichtstrahlrichtung versetzter und in Transportrichtung nachgeschalteter Lichtdurchtrittsspalt gebildet wird, dessen Lichtdurchtritt ein schmales Band auf dem Fotopapier beleuchtet, dessen Breite unter Berücksichtigung des Vergrößerungsmaßstabes der Zeilenbreite der lichtempfindlichen Elemente entspricht und daß die Abschirmelemente in dem Lichtdurchtrittsspalt oder dessen diesem zugehörigen Lichtstrahlengang wirksam werden.

5. Vorrichtung zur Durchführung des Verfahrens, insbesondere nach einem oder mehreren der Ansprüche 1 bis 4, mit einem Beleuchtungskopf, oberhalb einer Filmebene, einer Fotopapierebene im Abstand unter der Filmebene sowie einem Objektiv zwischen beiden Ebenen, dadurch gekennzeichnet, daß im Durchlicht eines Filmbildes oder Bildausschnittes (42) eine Lichtempfängereinheit (30) angeordnet ist, die eine Vielzahl lichtempfindlicher Elemente (32) umfaßt, die zeilenmäßig angeordnet sind, daß eine Abschirmeinheit 834, 52, 76) vorgesehen ist, die eine Vielzahl von Abschirmelementen (36, 38, 78) aufweist, welche von den lichtempfindlichen Elementen (32) angesteuert, im Belichtungsstrahl auf das Fotopapier einzeln oder gruppenweise aktivierbar sind.

6. Vorrichtung nach Anspruch 5, dadurch gekennzeichnet, daß die Abschirmeinheit (34, 76) außerhalb des Belichtungsstrahls (20) angeordnet ist und die Vielzahl von Abschirmelementen (36, 38, 78) mittels mechanischer Antriebe (40) einzeln oder gruppenweise in ihre: Funktionsstellung innerhalb des Belichtungsstrahles (20) bewegbar sind.

7. Vorrichtung nach Anspruch 5 oder 6, dadurch gekennzeichnet, daß auf mindestens zwei einander gegenüberliegenden Seiten des Belichtungsstrahls (20) spiegelbildlich ausgebildete Abschirmeinheiten (34, 76) angeordnet sind.

8. Vorrichtung nach einem der Ansprüche 5 bis 7, dadurch gekennzeichnet, daß die Abschirmeinheit (76) nach Art eines Nadeldruckers ausgebildet ist.

9. Vorrichtung nach einem der Ansprüche 5 bis 8, dadurch gekennzeichnet, daß die Abschirmelemente (36, 38; 78) in mindestens zwei parallelen Ebenen unter gegenseitiger Überlappung bewegbar angeordnet sind.

10. Vorrichtung nach Anspruch 5, dadurch gekennzeichnet, daß die Abschirmeinheit (52) aus einer im Belichtungsstrahl (20) des Filmbildes angeordneten Flüssigkristallplatte gebildet ist, die in separat ansteuerbare, zeilen- oder flächenmäßig orientierte Füssigkristallsegmente unterteilt ist, wobei die Flüssigkristallplatte (52) im nicht angesteuerten Zustand ihrer Segmente durchsichtig und im angesteuerten Zustand der Segmente segmentweise abgedunkelt oder durchlichtbehindert ist.

11. Vorrichtung nach einem der Ansprüche 5 bis 10, dadurch gekennzeichnet, daß die aktive Verweilzeit der Abschirmelemente (36, 38, 78) in Abhängigkeit von den elektrischen Ausgangsgrößen der jeweiligen lichtempfindlichen Elemente (32) regelbar ist.

12. Vorrichtung nach einem der Ansprüche 5 bis 11, dadurch gekennzeichnet, daß die Lichtempfängereinheit (30) eine Fotodioden-oder Fototransistorenzeile aufweist, die scannerartig das Filmbild abtastet, daß die abgetasteten Meßwerte in einem Speicher (74) gespeichert werden und der Speicher (74) die Abschirmelemente ansteuert.

13. Vorrichtung nach einem der Ansprüche 5 bis 12, dadurch gekennzeichnet, daß im Belichtungsstrahlgang (20) ein teildurchlässiger Spiegel (62) angeordnet ist, der einen Teil des auftreffenden Lichtes zur Lichtempfängereinheit (30) leitet.

14. Vorrichtung nach einem der Ansprüche 5 bis 13, dadurch gekennzeichnet, daß die Abschirmeinheit (34, 52, 76) in größerem Abstand vom Objektiv (24) angeordnet ist.

15. Vorrichtung nach einem der Ansprüche 5 bis 14, dadurch gekennzeichnet, daß die Abschirmeinheit (34, 52, 76) in Lichtstrahlrichtung vor dem Objektiv (24) angeordnet ist.

FIG.1

FIG.2

FIG.3

FIG.4

FIG.5

8

# FIG.6

# FIG.7